# EUROPÄISCHE PATENTANMELDUNG

(11) **EP 1 341 032 A1**
(43) Veröffentlichungstag der Anmeldung: **03.09.2003**
(21) Anmeldenummer: 02360075.2
(22) Anmeldetag: 28.02.2002
(51) Int. Cl.: G02F 1/225

(54) **Optischer Modulator aus photonischen Kristallen**

(71) Anmelder: ALCATEL, 75008 Paris (FR)
(72) Erfinder: Bastian, Dr. Georg, 70435 Stuttgart (DE)
(74) Vertreter: Rausch, Gabriele, Dr.

(57) **Zusammenfassung**

Optische Komponenten sind aus integrierten optischen Wellenleitern gebildet, die mindestens abschnittsweise eine periodische Veränderung der Dielektrizitätskonstanten nach art eines photonischen Kristalles aufweisen. Diese periodische Veränderung ist entsprechend gewählt, um die Gruppengeschwindigkeit von in dem optischen Wellenleiter zu übertragenden optischen Signalen zu verringern. Erfindungsgemäß wird entlang mindestens ein Teil des integrierten photonischen Kristalls ein Feld vorgesehen, das einen Einfluss auf die Wecheslwirkung in diesem optischen Wellenleiter und übertragenen optischen Signalen hat. Durch die Verringerung der Gruppengeschwindigkeit erhöht sich die Wechselwirkung unter Einfluss des Feldes von elektrischer oder magnetischer

## Beschreibung

Die Erfindung bezieht sich auf eine optische Komponente, die mindestens einem auf einem Substrat gebildeten optischen Wellenleiter aufweist. Letzterer ist abschnittsweise mit einer periodischen Veränderung der Dielektrizitätskonstante versehen, die eine Verringerung der Gruppengeschwindigkeit von in dem optischen Wellenleiter zu übertragenden optischen Signale verursacht.

Die ständig ansteigende Nachfrage von Bandbreiten motiviert die Telekommunikationsbetreiber die Leistung von deren optischen Netzwerken zu optimieren. Es scheint heutzutage ein Konsens zu geben, dass dies nur zu erreichen ist mit dem Einsatz von einer Vielzahl von Wellenlängen λ für die Übertragung von optischen Signalen. Alle solche Wellenlängen befinden sich in dem sogenannten dritten spektralen Fenster. Zur Zeit ist vor kurzem von Alcatel experimentell demonstriert worden, dass es möglich ist, eine Datenkapazität von über mehrere Tbit/s über mehrere tausende von Kilometer auf einer einzigen optischen Faser zu übertragen. Diese Höchstleistung wird dadurch gewonnen, dass bei der Übertragung von Daten z.B. 365 unterschiedliche Wellenlängen gleichzeitig über die optische Faser gesendet werden, wobei jede dieser unterschiedlichen Wellenlängen bei 10 Gbit/s moduliert werden. Es ist eindeutig abzuzeichnen, dass die heutige Entwicklung weiter in diese Richtung gehen wird, d.h. dass eine erhöhte Übertragungskapazität unweigerlich mit einer Erhöhung der Anzahl der unterschiedlichen Wellenlängen sowie deren Modulationsfrequenzen verbunden ist.

Bei der Verarbeitung von optischen Signalen, die mit Hilfe von einer so großen Anzahl von unterschiedlichen Wellenlängen übertragen werden, und dies bei so hohen Frequenzen (z.B. 10 Gbit/s pro λ) werden optische Komponenten verwendet, die mit einer immer größeren Anzahl von unterschiedlichen Bausteinen (z.B. Koppler, Verzweiger, Isolator, Zirkulator usw.) bestückt werden. Dies erklärt die Bemühung, solche Bausteine auf einem Substrat zu integrieren.

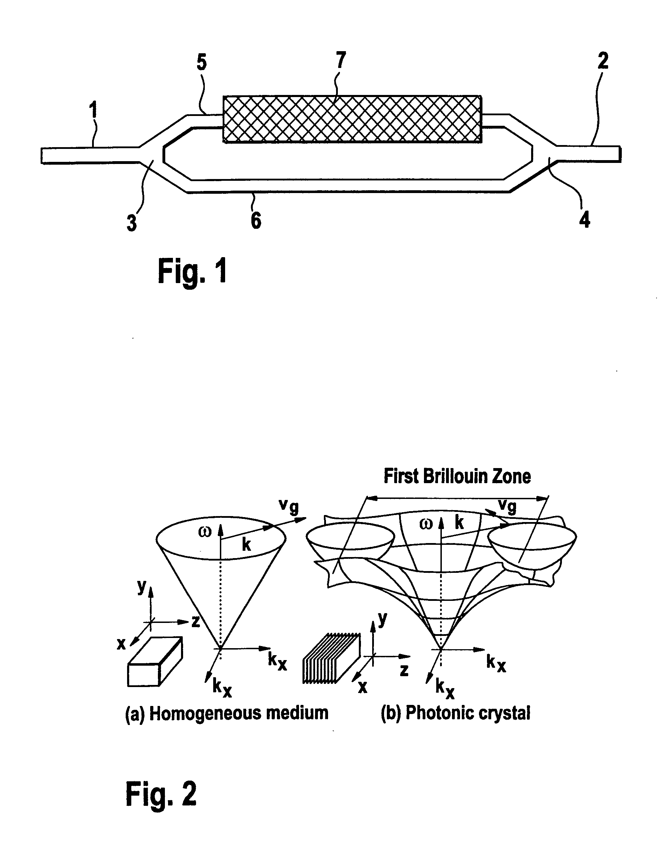

Viele solcher Bausteine basieren auf der Verwendung eines modulierten Feldes und werden entsprechend als integrierter optischer Modulator bezeichnet. Einer der meist verwendeten ist das Mach-Zehnder-Interferometer (siehe Fig. 1) in dem die Fortpflanzung von optischen Signalen in einem der zwei Arme moduliert werden kann. Wie auf Fig. 1 dargestellt, wird diese Modulation über eine Gate-Spannung an diesem Arm angelegt, erzeugt. Dabei werden elektro-optische Materialien (z.B. Lithiumniobat oder KTP) im optischen Wellenleiter eingesetzt, um einen stärkeren Einfluss des elektrischen Feldes auf den optischen Signalen zu erzielen. Die somit erzeugte Interferenz am Ausgang des Interferometers kann sowohl konstruktiv als destruktiv (z.B. durch Verschiebung der Wellenlängen, um eine Halbe Periode) in Abhängigkeit der angelegten Spannung sein. Somit wird die Intensität des Lichts am Ausgang des Interferometers moduliert. Um sehr hohe Frequenzen über mehrere Gbit/s zu erzeugen, muss der Einfluss der angelegten Spannung auf die sich fortpflanzenden optischen Signale maximiert werden. Dafür kann entweder die Gate-Struktur sehr lang über eine der zwei Arme des Interferometers gebildet werden oder eine sehr starke angelegte Spannung verwendet werden. Beide Möglichkeiten bringen mit sich Nachteile, da die Bausteine bei zunehmender Integration immer kleiner sein sollten.

Eine bessere Wirkung des verwendeten elektrischen Feldes zur Modulation von optischen Signalen kann mit Hilfe von elektrischen Wanderwellen gewonnen werden. Solche Wanderwellen benötigen aber eine elektrische Dispersions, die der Dispersion des Lichts genau gleich gesetzt ist. Da das elektrische Signal entlang der Wechselwirkungsstrecke jedoch gedämpft wird, lassen sich mit diesem Konzept ebenso keine Modulatoren mit beliebig hohen Frequenzen erzielen. Eine hohe Modulationsfrequenz von Licht mit Hilfe von Mach-Zehnder-Interferometer ist durch die Kapazität der metallischen Gate-Struktur und der benötigten anzulegenden Spannungen beschränkt. Eine direkte Modulation mit Hilfe von quasi statischen Gate-Strukturen ist wegen der viel zu großen Kapazitäten beziehungsweise RC-Zeiten (R-Widderstand, C-Kapazität) inkompatibel mit der Bandbreite von optischen Kommunikationssystemen, die wie wir oben gesehen haben, mehr als 10 Gbit/s betragen. Selbst die Verwendung von elektrischen Wanderwellen ermöglicht nicht optische Modulatoren mit hinreichend hohen Modulationsfrequenzen zu strukturieren.

Der Erfindung liegt die Aufgabe zugrunde, die Miniaturisierung der Bausteine von optischen Komponenten deutlich zu verbessern.

Die Aufgabe wird erfindungsgemäß durch eine optische Komponente nach der Lehre des Anspruchs 1 gelöst.

Aus der Patentanmeldung US 2001/0006567 ist es bekannt auf einem Substrat einer optischen Komponente einen photonischen Kristall herzustellen. Der photonische Kristall besteht aus Medien mit unterschiedlichen Dielektriziätskonstanten, wobei diese Medien in einer periodischen Struktur aufgestellt sind. Dieser photonische Kristall ist an dem Kreuzungspunkt zwei integrierten optischen Wellenleitern strukturiert. Ein solcher photonischer Kristall dient als wellenlängenabhängiger Filter, und soll somit ermöglichen passive optische Koppler herzustellen.

Aus der europäischen Patentanmeldung EP 0 964 305 ist es bekannt, passive optische Komponente herzustellen die integrierte optische Wellenleiter aufweisen, mit einem Abschnitt aus einem photonischen Kristall. Dieser photonische Kristall weist ein periodisches Gitter mit einer Veränderung der Dielektrizitätskonstanten wobei diese Periode geeignet ist für die Verwendung von optischen Wellenlängen in dem Bereich zwischen 800 nm bis zu 1.800 nm. Dabei werden die photonischen Kristalle entsprechend gewählt, um Defekte aufzuweisen, die bestimmte ausgewählte Wellenlängen der optischen Signale ausgeben (to drop).

Ausgegangen von diesem Stand der Technik, wird erfindungsgemäß eine optische Komponente weiterentwickelt, die integrierte optische Wellenleiter aufweist, wobei letztere mindestens abschnittsweise eine periodische Veränderung der Dielektrizitätskonstanten nach art eines photonischen Kristalles aufweisen. Diese periodische Veränderung ist entsprechend gewählt, um die Gruppengeschwindigkeit von in dem optischen Wellenleiter zu übertragenden optischen Signalen zu verringern. Erfindungsgemäß wird entlang mindestens ein Teil des integrierten photonischen Kristalls ein Feld vorgesehen, das mit die in diesem optischen Wellenleiter übertragenen optischen Signalen zu wechselwirken hat.

Dieses Feld wird vorteilhafter Weise moduliert. Zu dem kann die periodische Veränderung der Dielektrizitätskonstanten entsprechend gewählt werden, in Abhängigkeit der unterschiedlichen Wellenlängen der in diesem optischen Wellenleiter übertragenen optischen Signalen, die mit dem Feld zu wechselwirken hat. Das Durchlaufen von mindestens einem Abschnitt aus einem photonischen Kristall, dessen "Gitterkonstante" (Periode) gleiche Größenordnung wie die Wellenlänge der zu bearbeitenden optischen Signale aufweist, führt zu einer Verringerung der Gruppengeschwindigkeit dieser optischen Signale. Dadurch wird vorteilhafter Weise die Wechselwirkung mit dem Feld deutlich erhöht. Dies ermöglicht dann die Bereiche, in dem eine Wechselwirkung zwischen optischen Signalen und einem Feld statt zu finden hat, kleiner zu gestalten und / oder ein Feld von kleiner Amplitude bei gleicher Wirkung anzuwenden..

Erfindungsgemäß wird die Erhöhung der Wechselwirkung zwischen optischen Signalen und einem Feld sowohl für ein Feld von elektrischer Natur als auch von magnetischer Natur einsetzbar. im letzten Fall kann dies zum Aufbau eines Isolators oder Zirkulators verwendet werden. Dabei kann entweder ein äußeres Magnetfeld angelegt oder magnetische Materialien verwendet werden.

Vorteilhafte Ausgestaltungen der Erfindung ergeben sich aus den abhängigen Ansprüchen, den nachfolgenden Beschreibung und der Zeichnung.

Ein Ausführungsbeispiel der Erfindung wird nun unter Zuhilfenahme der beiliegenden Zeichnungen weiter erläutert.

Es zeigen:
- Fig. 1: eine schematische Draufsicht eines Mach-Zehnder-Interferometer aus dem Stand der Technik;
- Fig. 2: die Dispersion im Reziprokenraum für a) ein homogenes Medium und b) einen photonischen Kristall;
- Fig. 3: eine Draufsicht eines erfindungsgemäßen Mach-Zehnder-Interferometer.

Auf Fig. 1 ist ein typischer Mach-Zehnder-Interferometer gezeichnet, wie sie im Stand der Technik verwendet werden. Dabei ist die ganze Struktur bestehend aus den zwei Eingängen 1 und 2 mit den jeweiligen Abzweigungen 3 und 4 verbunden, die jeweils zu einem Ende von zwei Armen 5 und 6 führen, wobei ein Arm 5 fast vollständig von einer Gate-Struktur 7 überdeckt ist, in einem Substrat einer optischen Komponente strukturiert. Mit einem solchen Interferometer lässt sich gezielt ausgewählte optische Signale verarbeiten. Z.B. kann mit Hilfe einer angelegten Spannung über die Gate-Struktur 7 die Fortpflanzung von optischen Signalen entlang dem Arm 5 moduliert werden. Somit entsteht an einem der zwei Abzweigungen 3 oder 4 Interferenzen, die entweder konstruktiv oder destruktiv in Abhängigkeit der angelegten Spannung sein kann. Dies führt dann dazu, dass die Intensität der verarbeiteten optischen Signale entsprechend moduliert wird. Um eine sehr hohe Modulation von über 10 GHz zu erreichen, wie dies heute verlangt wird, muss entweder die Wechselwirkungslänge zwischen der angelegten Spannung und der zu verarbeitenden optischen Signale sehr lang sein oder die angelegte Spannung selbst sehr stark sein. Dies hat aber die oben erwähnten Nachteile.

In Fig. 2 a) ist die Dispersion im Reziprokenraum von ein homogenes Medium, wie dies der Fall ist, für optische Signale, die über Wellenleiter eines Mach-Zehnder-Interferometer nach Fig. 1 übertragen werden. Im Gegensatz hierzu ist in Fig. 2 b) die Dispersion für einen photonischen Kristall mit einer periodischen Veränderung der Dielektrizitätskontanten entlang der z-Achse gezeichnet. Dabei ist im Reziprokenraum leicht zu erkennen, dass eine Band-ähnliche Struktur entsteht. Die Gruppengeschwindigkeit, die sich durch die Relation **V**_{g}=∇ₖω(k), d.h. gleich der Steigung der Dispersion ist, wird durch die Entstehung der Band-ähnlichen Struktur verringert.

Erfindungsgemäß wird diese Verringerung von der Gruppengeschwindigkeit von optischen Signalen, die über photonische Kristalle übertragen werden ausgenutzt, indem ein Mach-Zehnder-Interferometer vollständig aus einem photonischen Kristall in einem Substrat integriert strukturiert wird.

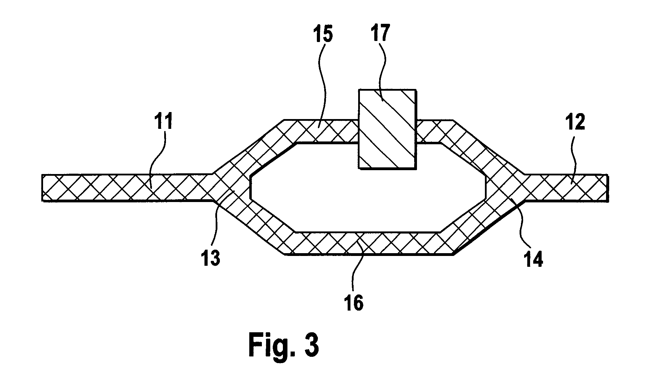

In Fig. 3 ist ein solches Beispiel gezeigt, wobei das Mach-Zehnder-Interferometer aus zwei Eingängen 11 und 12, die mit den jeweiligen Abzweigungen 13 und 14 verbunden sind, die jeder zu einem Ende von zwei Armen 15 und 16 führen, besteht. Zudem ist eine Gate-Struktur 17 über einen Teil des Armes 15 mitstrukturiert, zur Anlegung eines elektrischen Feldes. In diesem Beispiel sind die Wellenleitern durchgehend mit elektrooptischen Materialien versehen. Es ist aber auch möglich elektrooptischen Materialien nur bei der Gate-Struktur 17 einzusetzen. Wie gezeichnet, sind sowohl die Eingänge 11, 12 als auch die Abzweigungen 13, 14 und die Arme 15 und 16 aus einem photonischen Kristall hergestellt. Somit wird die Gruppengeschwindigkeit von spezifischen optischen Signalen, deren Wellenlänge mit der Periode des photonischen Kristalls vergleichbar ist und über ein solches Mach-Zehnder-Interferometer übertragen werden, verringert. Diese Verringerung der Gruppengeschwindigkeit führt zu einer Erhöhung der Wechselwirkung mit einem äußeren Feld. In dem vorgezeigten Beispiel auf Fig. 3 ist dieses Feld von elektrischer Natur, und wird über die Gate-Struktur 17 angelegt. Da die optischen Signale, die diesem Feld unterworfen sind, dann eine verringerten Gruppengeschwindigkeit aufweisen, wird eine deutlich geringere Wechselwirkungslänge benötigt, um eine Modulation zu erzeugen. Dementsprechend braucht die Gate-Struktur 17 wesentlich kleiner gestaltet zu werden, als dies bei einem gängigen Mach-Zehnder-Interferometer wie auf Fig. 1 dargestellt, der Fall ist. Und somit kann eine entsprechend größere Modulationsfrequenz erzielt werden.

Es ist durchaus möglich, vergleichbare Effekte zu erzielen, indem der Arm 15 nur abschnittsweise im Bereich der Gate-Struktur 17 aus einem photonischen Kristall strukturiert wird. In der Tat ist eine Verringerung der Gruppengeschwindigkeit nur von Relevanz, dort wo ein Feld angelegt wird. Die Wahl abschnittsweise oder vollständig einen erfindungsgemäßen Mach-Zehnder-lnterferometer aus einem photonischen Kristall zu strukturieren, kann mit der Wahl des Herstellungsverfahrens geknüpft werden.

Alternative Ausführungsbeispiele von erfindungsgemäßen Mach-Zehnder-Interferometern sind denkbar. Z.B. kann an mehreren Abschnitten von einem oder sogar beiden Armen des Interferometers ein oder gegebenenfalls unterschiedliche elektrische Felder vorgesehen werden. Zu beachten ist, dass jeder dieser Abschnitte in dem ein Feld anzulegen ist, aus photonischen Kristallen strukturiert sind. In ähnlicher Weise können unterschiedliche Bausteine von optischen Komponenten, die benötigt werden, um optische Signale zu verarbeiten und bei denen ein Feld vorgesehen ist, das mit diesen optischen Signalen zu wechselwirken hat, mindestens in dem Abschnitt, wo dieses Feld vorgesehen ist, aus einem photonischen Kristall strukturiert werden. Durch die Verringerung der Gruppengeschwindigkeit von in diesen Abschnitten übertragenen optischen Signalen, ist die Wechselwirkung mit dem dort angelegten Feld, das entweder von elektrischer oder von magnetischer Natur ist, erhöht. Dies ermöglicht solche Bausteine kleiner zu strukturieren.

Erfindungsgemäß kann ein Mach-Zehnder-Interferometer vorgesehen sein, bei dem das Feld von magnetischer Natur ist. Dabei ist Vorteilhafterweise magnetische Materialen bei der Strukturierung der optischen Wellenleiter verwendet, um mindestens in dem Abschnitt in dem das Feld ausgebildet ist, große Faraday-Effekte bekommen zu können. Das magnetische Feld selbst kann durch Anlegen eines äußeren magnetischen Feldes gegeben sein. Es ist aber auch vorstellbar eine magnetische oder magnetisierbare äußere Beschichtung auf den einen Abschnitt zu strukturieren, welche im optischen Wellenleiter ein den Faraday-Effekt hervorrufendes permanentes Magnetfeld erzeugt.

Dabei ist mindestens in dem Abschnitt, in dem das magnetische Feld vorgesehen ist, der integrierte Mach-Zehnder-Interferometer aus einem photonischen Kristall strukturiert. Das magnetische Feld kann zur Bildung von einem nicht Reziprokenphasenschieber-Abschnitt dienen. Somit ist ein solches Mach-Zehnder-Interferometer als optischer Isolator oder Zirkulator zu verwenden, in dem optische Signale mit gegebenen Wellenlängen in einem Weg komplett beziehungsweise nur teils blockiert werden können. Solche Bausteine können in unterschiedlicher Art und Weise kombiniert werden, um in einer optischen Komponente integriert zu werden. Die Verwendung der erfindungsgemäßen Kombination von optischen Wellenleitern, die mindestens an den Abschnitten in dem ein Feld vorgesehen ist, das mit den darin zu übertragenden optischen Signalen zu wechselwirken hat, aus einem photonischen Kristall hergestellt sind, ermöglich solche Bausteine kompakter aufzubauen und sogar gleichzeitig deren Leistungen (z.B. die erzielte Modulation) zu optimieren.

## Patentansprüche

1. Optische Komponente mit mindestens einem auf einem Substrat gebildeten optischen Wellenleiter, der mindestens Abschnittsweise eine periodische Veränderung der Dielektrizitätskonstante aufweist, die eine Verringerung der Gruppengeschwindigkeit von darin zu übertragenden optischen Signalen verursacht, **dadurch gekennzeichnet, dass** mindestens entlang ein Teil des Abschnittes mit periodischen Veränderung der Dielektrizitätskonstante ein Feld vorgesehen ist, das mit diesen darin zu übertragenden optischen Signalen zu Wechselwirken hat.

2. Optische Komponente nach Anspruch 1, **dadurch gekennzeichnet, dass** die periodische Veränderung der Dielektrizitätskonstante entsprechend gewählt ist, so dass das Feld selektiv auf unterschiedlichen Wellenlängen der optischen Signalen zu Wechselwirken hat.

3. Optische Komponente nach Anspruch 1, **dadurch gekennzeichnet, dass** das Feld modulierbar ist.

4. Optische Komponente nach Anspruch 1, **dadurch gekennzeichnet, dass** das Feld von elektrischer Natur ist.

5. Optische Komponente nach Anspruch 4, **dadurch gekennzeichnet, dass** mindestens der Abschnitt des optischen Wellenleiters in dem das Feld ausgebildet ist, elektrooptische Materialen aufweist.

6. Optische Komponente nach Anspruch 1, **dadurch gekennzeichnet, dass** das Feld von magnetischer Natur ist.

7. Optische Komponente nach Anspruch 6, **dadurch gekennzeichnet, dass** mindestens der Abschnitt des optischen Wellenleiters in dem das Feld ausgebildet ist, magnetische Materialen aufweist.

8. Optische Komponente nach Anspruch 1, **dadurch gekennzeichnet, dass** dieser Wellenleiter teils eines integrierten Mach-Zehnder Interferometers ist, wobei das Feld zur Bildung von Interferenzen der zu übertragenden optischen Signalen zu dienen hat.

9. Optische Komponente nach Anspruch 8, **dadurch gekennzeichnet, dass** beide Armen des integrierten Mach-Zehnder Interferometers durchgehend eine periodische Veränderung der Dielektrizitätskonstante aufweisen, die eine Verringerung der Gruppengeschwindigkeit von darin zu übertragenden optischen Signalen verursacht.

10. Optische Komponente nach Anspruch 1, **dadurch gekennzeichnet, dass** dieser Wellenleiter teils eine integrierte optische Schaltung ist, wobei das Feld zur Steuerung der Schaltung zu dienen hat.

11. Optische Komponente nach Anspruch 1, **dadurch gekennzeichnet, dass** das Feld zur Bildung eines für die in den Wellenleiter zu übertragenden optischen Signalen nicht reziproken Phasenschieber-Abschnitt zu dienen hat.

12. Optische Komponente nach Anspruch 8 oder 11, **dadurch gekennzeichnet, dass** dieser Wellenleiter teils eines integrierten optischen Isolators oder Zirkulators ist.

13. Optische Komponente nach Anspruch 12, **dadurch gekennzeichnet, dass** die optischen Wellenleiter, die dieses integrierten optischen Isolators oder Zirkulators bilden, durchgehend eine periodische Veränderung der Dielektrizitätskonstante aufweisen, die eine Verringerung der Gruppengeschwindigkeit von darin zu übertragenden optischen Signalen verursacht.
